Europäisches Patentamt

European Patent Office

Office européen des brevets

(19)

(11) Veröffentlichungsnummer: **0 340 477**
**A2**

## (12) EUROPÄISCHE PATENTANMELDUNG

(21) Anmeldenummer: 89106231.7

(22) Anmeldetag: 08.04.89

(51) Int. Cl.⁴: **F16N 13/16**

(30) Priorität: 05.05.88 DE 3815233

(43) Veröffentlichungstag der Anmeldung:
08.11.89 Patentblatt 89/45

(84) Benannte Vertragsstaaten:
AT BE CH DE ES FR GB GR IT LI LU NL SE

(71) Anmelder: **BAIER & KÖPPEL GMBH & CO.**
**Präzisionsapparate**
**Beethovenstrasse 14**
**D-8570 Pegnitz(DE)**

(72) Erfinder: **Skarupa, Günter**
**Pestalozzistrasse 10**
**D-8570 Pegnitz(DE)**

(74) Vertreter: **Richter, Bernhard, Dipl.-Ing.**
**Beethovenstrasse 10**
**D-8500 Nürnberg 20(DE)**

(54) Antrieb für eine Schmiermittelpumpe.

(57) Die Erfindung geht aus von einem Antrieb für eine Schmiermittelpumpe für die Zentralschmierung von Nutzfahrzeugen, einschließlich Anhänger, Auflieger, Sonderfahrzeugen und dergleichen mit bevorzugt schwer zu verpressenden Schmiermitteln einer hohen Penetration, wobei die Schmiermittelpumpe mit einem Rührwerk (3) in einem Schmiermittelbehälter (1) und mit einem exzentergetriebenen Förderkolben (5) für den Schmiermitteltransport versehen ist, wobei ferner das Rührwerk und der Exzenter (4) auf einer gemeinsamen Antriebswelle (2) angebracht sind, die durch den Antrieb betätigt wird. Ein solcher Antrieb soll ohne Erhöhung der Herstellungskosten bei Nutzfahrzeugen der Gefahrengutklasse 1 einsetzbar sein, wobei die Geschwindigkeit der Schmiermittelförderung im wesentlichen lastunabhängig sein soll. Um dies zu erreichen, ist vorgesehen, daß als Antrieb ein pneumatischer Antrieb vorgesehen ist und daß die Steuerung dieses Antriebes durch ein explosionsgeschütztes Magnetventil (19) erfolgt.

Fig. 1

EP 0 340 477 A2

## Antrieb für eine Schmiermittelpumpe

Die Erfindung betrifft einen Antrieb für eine Schmiermittelpumpe gemäß dem Oberbegriff des Anspruches 1. Bei dem bevorzugten Anwendungsgebiet der Erfindung, nämlich einer Schmierung mit schwer zu verpressenden Fetten ist speziell an eine Schmierung mit Fetten der Klasse NLGI 2 gedacht. Diese Fette haben eine hohe Penetration, verlangen also eine erhebliche Preßkraft. Bisher ist bei einer Anordnung gemäß dem Oberbegriff des Anspruches 1 als Antrieb ein Elektromotor vorgesehen worden, der über ein Untersetzungsgetriebe auf die gemeinsame Antriebswelle wirkt. Damit ist zunächst der Nachteil verbunden, daß aufgrund der lastabhängigen Drehzahlschwankungen eines solchen Elektromotors die Umdrehungsgeschwindigkeit der Antriebswelle mit zunehmender Belastung stark abfällt, mit Abnehmen der Belastung dagegen ansteigt. Da die im Oberbegriff des Anspruches 1 genannten Nutzfahrzeuge sehr unterschiedlichen Temperaturen (von scharfem Frost bis starker Hitze) ausgesetzt sind und da die Penetration der Fette sehr temperaturabhängig ist, ergeben sich entsprechend der jeweils anliegenden Temperatur recht unterschiedliche Umdrehungsgeschwindigkeiten der Antriebswelle und damit die Abgabe unterschiedlicher Schmiermittelmengen. Hinzu kommt der Nachteil, daß die Verwendung von Elektromotoren bei Nutzfahrzeugen, welche Gefahrengut der Klasse 1 transportieren, nicht zulässig ist. Der Einsatz von explosionsgeschützten Elektromotoren würde zwar bei dieser Gefahrenklasse theoretisch möglich sein, verbietet sich aber aus praktischen Gründen, nämlich wegen der hohen Gestehungskosten solcher explosionsgeschützter Motoren.

Die Aufgabe der Erfindung besteht demgegenüber darin, einen Antrieb gemäß dem Oberbegriff des Anspruches 1 dahingehend auszugestalten, daß der ohne Mehraufwand in der Fertigung bei Nutzfahrzeugen der Gefahrengutklasse 1 eingesetzt werden kann, wobei die Geschwindigkeit der Schmiermittelförderung im wesentlichen lastunabhängig sein soll.

Die Lösung dieser Aufgabe wird, ausgehend vom Oberbegriff des Anspruches 1, zunächst in den Merkmalen des Kennzeichens des Anspruches 1 gesehen. Ein pneumatischer Antrieb und ein explosionsgeschütztes Magnetventil genügen den Bestimmungen der Gefahrengutklasse 1, sind aber mit wesentlich geringeren Kosten herzustellen als explosionsgeschützte Elektromotoren und die dazugehörigen Steuerungen. Außerdem ist ein pneumatischer Antrieb insgesamt robuster als ein Elektromotor. Seine Arbeitsgeschwindigkeit ist von der jeweils zu bewegenden Last im wesentlichen unabhängig, was auch bei schwer zu verpressenden Fetten und unterschiedlichen Außentemperaturen eine im wesentlichen konstante Betätigungsgeschwindigkeit des Schmiermittelvorganges ergibt. Erwähnt sei, daß man Schmierungen mit pneumatischen Antrieben bisher nur in anderem Zusammenhang in der Form kannte, daß ein Folgekolben an einer Seite mit Druckluft beaufschlagt wurde, während sich an der anderen Kolbenseite das Schmiermittel befand, das vom Kolben aufgrund des Luftdruckes in Richtung zu den Förderkolben gedrückt wurde. Dabei ergaben sie nachteiligerweise Leckagen sowohl von Luft in den Schmiermittelraum, als auch umgekehrt von Schmiermittel in den Luftraum sowie Förderprobleme. Im Endergebnis waren diese Vorrichtungen unbefriedigend und unsicher. Auch wurde das Schmiermittel durch die Lufteinschlüsse schaumig.

Eine bevorzugte Ausführungsform der Erfindung ist Gegenstand des Anspruches 2. Hierdurch wird unter Vermeidung einer Unterschmierung oder einer Überschmierung ziemlich genau die von einem solchen Fahrzeug benötigte Schmiermittelmenge den jeweiligen Schmierstellen zugeführt. Die ebenfalls bevorzugten Merkmale des Anspruches 3 sichern, daß ein Arbeitsweg oder -hub des pneumatischen Antriebes die gemeinsame Antriebswelle von Rührwerk und Exzenter so weit dreht, daß ein bei bestimmten Exzenterstellungen unter Umständen eintretendes, ungewolltes Rückwärtsdrehen des Exzenters und damit der Antriebswelle unschädlich ist. Die Ansprüche 4 bis 9 befassen sich mit vorteilhaften und robusten Ausführungsmöglichkeiten des pneumatischen Antriebes in Form eines Antriebskolbens innerhalb einer Führungskammer und den zugehörigen Bauelementen. Die Ansprüche 10 und 11 betreffen eine bevorzugte Ausführung der Luftzuführung.

Weitere Vorteile und Merkmale der Erfindung sind dem Inhalt der Patentansprüche, sowie der nachfolgenden Beschreibung und der zugehörigen Zeichnung von erfindungsgemäßen Ausführungsmöglichkeiten zu entnehmen. In der Zeichnung zeigt:

Fig. 1: einen Längsschnitt durch ein Ausführungsbeispiel der Erfindung mit Pumpe, pneumatischem Antrieb, Luftzuführung und Schmiermittelabführung,

Fig. 2: eine Draufsicht und teilweisen Schnitt, wobei die Draufsicht gemäß dem Pfeil A in Fig. 1 und der Schnitt gemäß der Linie II-II in Fig. 1 erfolgt ist,

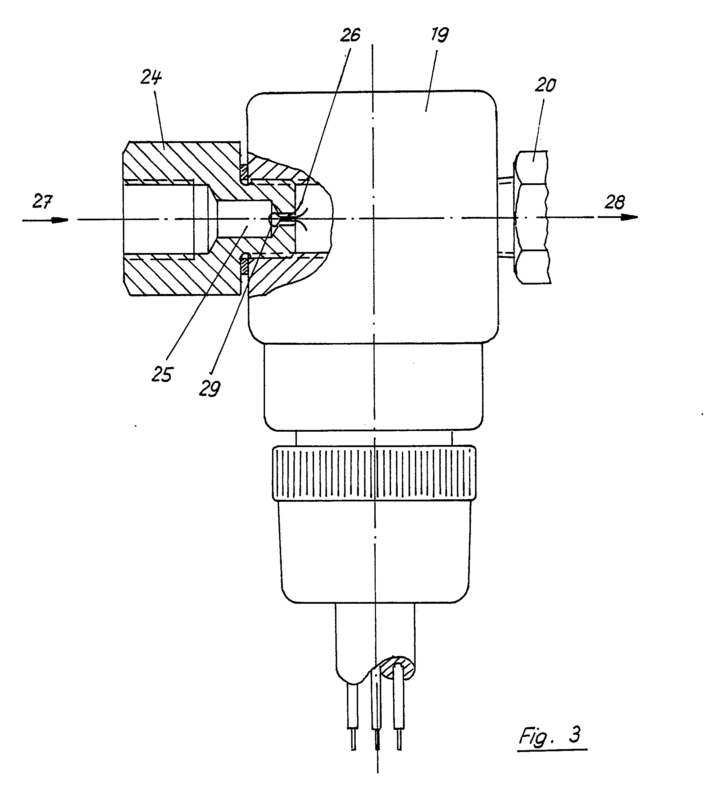

Fig. 3: im vergrößerten Maßstab das Magnetventil mit Luftzuführung.

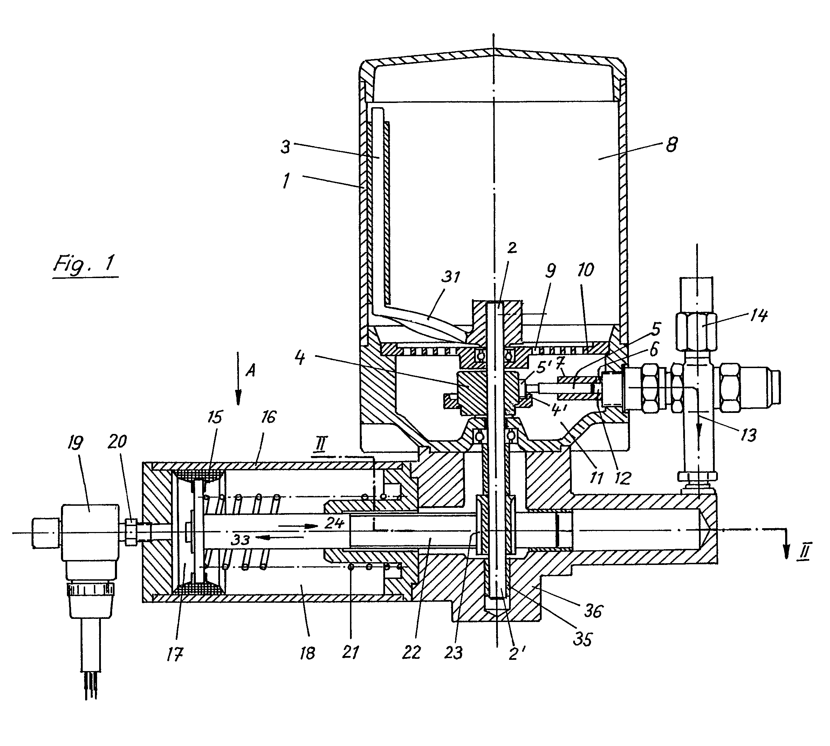

Zunächst wird anhand der Fig. 1 der an sich bekannte Aufbau einer solchen Pumpe erläutert. In das Schmiermittelgehäuse 1 ragt der obere Bereich einer Antriebswelle 2 hinein, auf der ein mit ihr umlaufendes Rührwerk 3 und ein ebenfalls mit ihr umlaufender Exzenter 4 befestigt sind. Fig. 1 zeigt eine Stellung des Exzenters, in der sein Bereich mit dem größten Radius sich links der Welle 2 befindet, dagegen sein Bereich mit dem kleinsten Radius eine Position rechts von der Welle 2 einnimmt. Damit hat der das Schmiermittel fördernde Kolben 5 seine am weitesten zurückgezogene Stellung, in der durch eine Öffnung (Saugbohrung) 6 eines Pumpenelementes 7 das Schmiermittel in einen Aufnahmeraum 12 des Pumpenelementes 7 eintreten kann. Das Schmiermittel befindet sich im Innenraum 8 des Gehäuses 1, in dem es vom Rührwerkarm 3 umgerührt und aufgrund des Druckes des schräggeformten Rührwerkbodens 31 durch Öffnungen 9 eines den Raum 8 nach unten abgrenzenden Bodens 10 in den weiteren Vorratsraum 11 gelangt der sowohl den Exzenter 4, als auch das Pumpenelement 7 umgibt. Das Schmiermittel steht in diesem Vorratsraum 11 unter einem gewissen Überdruck. Dieser Überdruck reicht im Zusammenwirken mit einem Unterdruck im Aufnahmeraum 12 des Pumpenelementes 7 aus, um in dieser Position des Förderkolbens 5 den Aufnahmeraum 12 mit Schmiermittel zu füllen. Dabei sind etwaige Lufteinschlüsse im Schmiermittel bereits bei seinem Hindurchdrücken durch die Öffnungen 9 entfernt, bzw. unschädlich gemacht worden. Wird in noch näher zu erläuternder Weise die Antriebswelle 2 durch den pneumatischen Antrieb gedreht, so stößt der Exzenter den Förderkolben 5 nach rechts und das Schmiermittel wird gemäß eingezeichnetem Pfeil 13 dem jeweiligen Verteilsystem bzw. Schmierstellen zugeführt. 14 ist ein Überdruck- oder Sicherheitsventil. Mit dem Weiterdrehen der Welle 2 gelangt der Exzenter wieder in die in Fig. 1 dargestellte Lage zurück, bevorzugt noch etwas über diese Lage hinaus. Bei einer solchen Betätigung des Förderkolbens 5 durch den Exzenter 4, hervorgerufen durch einen Arbeitshub der Pneumatik, empfiehlt es sich, daß hierbei die Welle 2 etwas mehr als eine komplette Umdrehung durchführt, z.B. das 1, 2fache einer Umdrehung. Wenn der Förderkolben 5 das Schmiermittel in Pfeilrichtung 13 preßt, wird von ihm die Querbohrung 6 abgeschlossen, so daß während dieser Phase kein Schmiermittel mehr in den Raum 12 eintreten kann. Sobald er die Querbohrung 6 frei gibt (siehe Fig. 1) wird wieder neues Schmiermittel in den Raum 12 eintreten und so fort.

Der bereits erwähnte pneumatische Antrieb befindet sich gemäß diesem Ausführungsbeispiel unterhalb des Schmiermittelbehälters und der Pumpenmittel. Dazu gehört gemäß diesem Ausführungsbeispiel ein Antriebskolben 15 der in einer zylindrischen Führungshülse 16 gleitend gelagert ist. Er unterteilt diese Hülse in eine erste Kammer 17 (in Fig. 1 links gelegen) und in eine zweite Kammer 18 (in Fig. 1 rechts gelegen). Vom explosionsgeschützten Magnetventil 19 her wird die Druckluft des Antriebes über die Leitung 20 der ersten Kammer 17 zugeführt. Dies ist bevorzugt ein sogenanntes 3/2 Wege-Magnetventil. Dies bewegt den Antriebskolben 15 gegen die Wirkung einer Feder 21 nach rechts. Am Antriebskolben 15 ist eine in die zweite Kammer 18 hineinragende Zahnstange 22 befestigt, die mit einem Zahnrad oder Ritzel 23 kämmt das am unteren Bereich der Antriebswelle 2 über einen Freilauf angebracht ist. Bei einem Arbeitshub des Antriebskolbens in Pfeilrichtung 24 sperrt der Freilauf und die Antriebswelle 2 wird gedreht. Die Druckkraft preßt die Rückholfeder 21 entsprechend zusammen. Die Länge der Zahnung 22' der Zahnstange 22 ist so bemessen, daß mit einem Arbeitshub der Förderkolben 5 einmal nach rechts und dann über den Mitnehmer 4' des Exzenters 4, der an einem Bund 5' des Förderkolbens angreift, mindestens wieder in die Ausgangslage gemäß Fig. 1 zurück bewegt wird.

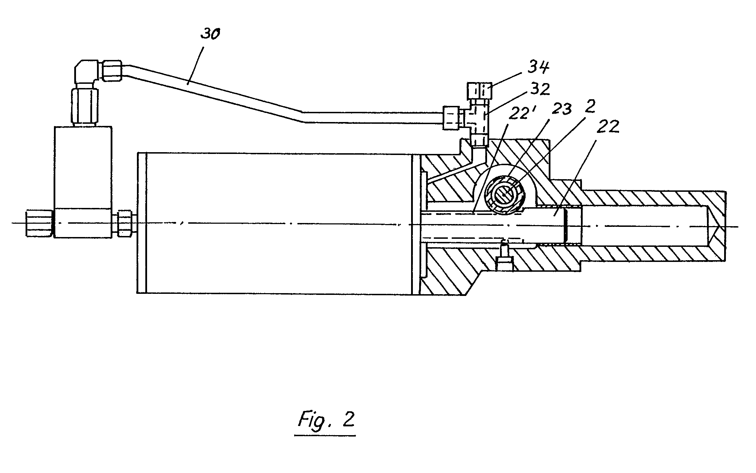

Nach Vollendung des Arbeitshubes unterbricht das Magnetventil (auch Wege-Magnetventil genannt) 19 die Druckluftzufuhr zur ersten Kammer 17. Danach steuert das Magnetventil 19 (siehe Fig. 2) in der Weise um, daß die Druckluftzufuhr gesperrt und der in der Kammer 17 befindlichen Luft über das Magnetventil 19 der Weg zu einer Abluftrückführungsleitung 30 frei gegeben wird. Die noch vorhandene Luft der ersten Kammer 17 wird über diese Leitung 30 und eine Anschlußverschraubung 32 der zweiten Kammer 18 zugeführt (in diesem Stadium ist die zweite Kammer 18 relativ klein und das Volumen der ersten Kammer 17 relativ groß), da die Rückholfeder 21 den Antriebskolben 15 in Richtung des Rückwärtshubes (Leerhub) 33 drückt. Erwähnt sei, daß während des Arbeitshubes in der zweiten Kammer 18 befindliche Luft durch die Anschlußverschraubung 32 und zwar deren Stutzen 34 ins Freie gelangt. Durch die vorstehend erläuterte Abluftrückführung in die zweite Kammer 18 ist, da die Abluft in der ersten Kammer 17 einen höheren Druck als die Atmosphäre hat, beim Rückwärtshub 33 ein Eindringen von Feuchtigkeit oder Schmutz durch die Verschraubung 32, 34 in die zweite Kammer verhindert.

Beim Rückwärtshub 33 sorgt der Freilauf zwischen Zahnrad 23 und Antriebswelle 2 dafür, daß hierbei diese Welle nicht mitgedreht wird. Dies kann ein üblicher Freilauf, z.B. ein Hülsen-Freilauf sein. Ferner ist ein weiterer Freilauf 35 zwischen dem in Fig. 1 unten gelegenen Ende 2' der Antriebswelle und dem Lagergehäuse 36 vorgesehen, der eine ungewollte Rückwärtsdrehung des Exzenters 4 und des Rührwerkes 3 durch auftretende Rückstellmomente verhindert, indem er die Drehung der Welle 2 nur in der vorgesehenen Antriebsrichtung erlaubt.

Die Steuerung des Magnetventiles erfolgt in nicht näher dargestellter Weise bevorzugt in Abhängigkeit von der Zahl der Betätigungen des Bremslichtes des Nutzfahrzeuges. Als Nutzfahrzeuge sind nicht nur Fahrzeuge mit eigenem Antrieb, sondern auch Anhänger oder sogenannte Auflieger und Sonderfahrzeuge zu verstehen. Für die Luftzufuhr empfiehlt es sich, z.B. am Einlaufstutzen 24 des Magnetventiles, eine Drosselstelle vorzusehen, die in diesem Beispiel zunächst gemäß Ziffer 25 den Durchtrittsquerschnitt für Luft etwas verringert und im weiteren Luftweg eine noch engere Drosselstelle in Form einer Düse 26 vorsieht. Dies hat den Vorteil, daß bei einem Öffnen des Magnetventiles 19 der mit den beiden Pfeilen 27, 28 angedeutete Luftdurchtritt nicht schlag- oder explosionsartig in die erste Kammer 17 gerät, was zu Beginn des Arbeitshubes einen nachteiligerweise zu starken Impuls auf den Antriebskolben 15 zur Folge hätte. Vielmehr sorgen die Drosselstellen 25, 26 dafür, daß sich der Luftdruck in der ersten Kammer 17 mit einer gewissen Zeitverzögerung aufbaut und damit das Rührwerk 3 gegen den Widerstand der im Behälter 1 befindlichen Schmiermittelmasse in Rotation versetzt werden kann. Um in der Drosseldüse 26 Vereisungen oder ein Zustopfen mit Schmutz zu verhindern, kann in ihr ein Splint 29 gelagert sein, dessen Außendurchmesser kleiner ist als der Innendurchmesser der Düse 26. Der Luftstrom sorgt dabei für ein Hin- und Herbewegen des Splintes innerhalb der Düse 26 und verhindert damit Ablagerungen oder Vereisungen.

Alle dargestellten und beschriebenen Merkmale, sowie ihre Kombinationen untereinander sind erfindungswesentlich, soweit sie nicht ausdrücklich als bekannt bezeichnet sind.

**Ansprüche**

1. Antrieb für eine Schmiermittelpumpe für die Zentralschmierung von Nutzfahrzeugen, einschl. Anhänger, Auflieger, Sonderfahrzeugen und dergleichen mit bevorzugt schwer zu verpressenden Schmiermitteln einer hohen Penetration, wobei die Schmiermittelpumpe mit einem Rührwerk in einem Schmiermittelbehälter und mit einem exzentergetriebenen Förderkolben für den Schmiermitteltransport versehen ist, wobei ferner das Rührwerk und der Exzenter auf einer gemeinsamen Antriebswelle angebracht sind, die durch den Antrieb betätigt wird, dadurch gekennzeichnet, daß als Antrieb ein pneumatischer Antrieb vorgesehen ist und daß die Steuerung dieses Antriebes durch ein explosionsgeschütztes Magnetventil (19) erfolgt.

2. Antrieb nach Anspruch 1, dadurch gekennzeichnet, daß die Steuerung des Magnetventiles (19) in Abhängigkeit von der Zahl der Betätigungen des Bremslichtes erfolgt.

3. Antrieb nach Anspruch 1 oder 2, dadurch gekennzeichnet, daß der pneumatische Antrieb eine Drehung der Antriebswelle (2) des Rührwerkes (3) und des Exzenters (4) um zumindest etwas mehr als eine vollständige Umdrehung der Antriebswelle bewirkt, z.B. um das 1, 2fache einer vollständigen Wellenumdrehung.

4. Antrieb nach einem der Ansprüche 1 bis 3, dadurch gekennzeichnet, daß ein pneumatisch betätigter Antriebskolben (15) eine von ihm mit bewegte Zahnstange (22) trägt, die mit einem Zahnrad oder Ritzel (23) der Antriebswelle (2) für das Rührwerk (3) und den Exzenter (4) kämmt.

5. Antrieb nach Anspruch 4, dadurch gekennzeichnet, daß die Länge der Zahnstange (22) und die Übersetzung von der Zahnstange zum Ritzel oder Zahnrad (23) der Antriebswelle (2) so gewählt sind, daß ein Arbeitshub (24) des Antriebskolbens (15) zumindest etwas mehr als eine vollständige Umdrehung der Antriebswelle (2) und damit einen Saug- und Druckhub des Förderkolbens (5) bewirkt; z. B. eine 1, 2fache Umdrehung der Antriebswelle.

6. Antrieb nach Anspruch 4 oder 5, dadruch gekennzeichnet, daß als Betätigung für den entgegengesetzt sum Arbeitshub · (24) gerichteten Leerlauf- oder Rückwärtshub (33) des Antriebskolbens (15) eine Rückholfeder (21) dient und daß dabei ein zwischen Zahnstange (22) und Ritzel oder Zahnrad (23) vorgesehener Freilauf wirksam ist.

7. Antrieb nach einem der Ansprüche 1 bis 6, dadurch gekennzeichnet, daß zwischen der Antriebswelle (2) des Rührwerkes (3) und des Exzenters (4) und dem Gehäuse (36) des pneumatischen Antriebes ein weiterer Freilauf (35) vorgesehen ist, der ein Drehen der Antriebswelle in Antriebsrichtung erlaubt, in der Gegendrehrichtung jedoch sperrt.

8. Antrieb nach einem der Ansprüche 1 bis 7, dadurch gekennzeichnet, daß der Antriebskolben (15) in einer Führungshülse (16) läuft und diese in zwei Kammern (17, 18) unterteilt, wobei die eine, erste Kammer (17) mit der Druckluft beaufschlagbar ist, während die andere, zweite Kammer (18) zumindest einen Teil der Zahnstange (22) und die Rückholfeder (21) enthält.

9. Antrieb nach Anspruch 8, gekennzeichnet durch eine über das Magnetventil (19) von der ersten Kammer (17) in die zweite Kammer (18) führende Abluftrückführungsleitung (30), durch eine beim Eingang in die zweite Kammer vorhandene Verbindung (32, 34) mit der Außenluft und durch eine Steuerung des Magnetventiles (19), die nach Beendigung des Arbeitshubes (24) die Druckluftzufuhr zur ersten Kammer (17) unterbricht und die Abluft rückführt.

10. Antrieb nach Anspruch 9, dadurch gekennzeichnet, daß die Abluftrückführungsleitung (30) in die Verbindung (32, 34) der zweiten Kammer (18) mit der Außenluft mündet.

11. Antrieb nach einem der Ansprüche 1 bis 10, dadurch gekennzeichnet, daß in der Luftzuführung (27, 28) der Druckluft eine Drossel (25, 26) vorgesehen ist, die nach Öffnen des Magnetventiles (19) den Aufbau des Luftdruckes in der ersten Kammer (17) mit einer gewissen Zeitverzögerung bewirkt.

12. Antrieb nach Anspruch 11, dadurch gekennzeichnet, daß in einer Drosseldüse (26) ein im Durchmesser demgegenüber kleinerer Splint (29) vorgesehen ist.

Fig. 1

Fig. 2

_Fig. 3_